# EUROPEAN PATENT SPECIFICATION

(11) **EP 3 650 760 B1**
(45) Date of publication and mention of the grant of the patent: **06.09.2023**
(21) Application number: 19207560.4
(22) Date of filing: 06.11.2019
(51) Int. Cl.: F24D 3/14

(54) **A PIPE RETENTION DEVICE**
ROHRRÜCKHALTEVORRICHTUNG
DISPOSITIF DE RETENUE DE TUYAUX

(30) Priority: 09.11.2018 GB 201818305
(43) Date of publication of application: 13.05.2020
(73) Proprietor: Epic Insulation Ltd, Beaconsfield Buckinghamshire HP9 1NB (GB); Inventive Concept Ltd, London N1 7GU (GB)
(72) Inventor: Harmer, Paul, London, N1 7GU (GB); Woolley, Graham, Beaconsfield, Buckinghamshire HP9 1NB (GB)
(74) Representative: Dolleymores

(56) References cited:
- EP-A1- 2 994 582
- DE-A1- 4 238 943
- FR-A1- 2 746 426
- GB-A- 2 373 042
- NL-A- 9 400 429
- US-A1- 2014 069 039

## Description

The invention relates to a pipe retention device, in particular to such a device suitable for use in a liquid-based floor, wall, or ceiling heating or cooling assembly.

Liquid-based heating or cooling assemblies are heating or cooling assemblies that duct a heated or cooled liquid through a circuit of pipe for heating or cooling a region/room of a building in which the assembly is installed. They are most commonly provided under the floors of buildings for heating, used as an alternative to conventional radiators, wherein the term "underfloor heating" is commonly used in reference to such assemblies. They may also be located in walls or ceilings.

In a liquid based floor heating (or underfloor heating) assembly, it is typical for an array of pipe to be laid out across the floor in a manner where after a first straight section, the pipe curves back on itself, so that a second straight section is approximately parallel to the first straight section (a form of meandering), and after the second straight section, the pipe curves back on itself, so that a third straight section is approximately parallel to the second straight section, and so on. Certain pipes also have to pass across the floor in a straight manner, where for example the pipe is not part of the floor heating assembly of the particular room it is passing through but merely a supply or return pipe for or from another room.

Another commonly employed pipe configuration is known as a snail-like configuration. The snail-like configuration typically allows pipes to be laid at smaller intervals, thereby improving the heating or cooling output, and the snail like configuration typically means less bends in the pipe, therefore less of a burden on the pump that circulates the liquid through the pipe. However, a drawback of the snail-like configuration is that it is more complicated to lay down as it requires more forethought.

A number of prior art arrangements exist that are suitable for fixing an array of pipe in a desired circuit form. Such arrangements include those shown in EP 2994582, DE 29805158 and US 2008/017725, FR 2746426, DE 4238943, US 2014/069039, GB 2373042 and NL 9400429.

Prior art arrangements have typically been configured such that only a specific size of pipe (i.e. a pipe of a specific diameter) may be retained by each pipe retention device.

Pipes have a specific bending radius which depends on the material and geometry of the pipe amongst other factors. It is highly undesirable to expose a pipe to an unsafe bending radius or damage may result leading to leakage from pipes in a heating or cooling assembly, which can be especially difficult to deal with when the pipe work is buried under floor in a dry mix of sand/cement, or alternatively in a flowing medium, commonly known as screed, or the like. Pipe "kinking" is also a problem, which can negatively affect the flow characteristics of liquid passing through the pipe, typically putting more demands on a pump used to pump liquid through the pipe. Moreover, the pipe has a strong tendency to lift away from the mounting surface at points of inflexion, which can cause installation problems both of the pipe itself and the pipe retention device, which may be lifted from the mounting surface with the pipe.

The present invention arose in a bid to provide an improved liquid based pipe retention device capable of overcoming a range of shortcomings present in the prior art, including a limitation to a specific pipe size (or very limited range of different pipe sizes) for each retention device, and issues of uplift of the pipe from the retaining means and/or resultant uplift of the retaining means from a mounting surface.

According to a first aspect of the invention there is provided a pipe retention device as recited in Claim 1.

The base may have one or more substantially straight edges, at least one of the edges extending in a first direction.

Each of the second protrusions may preferably project either parallel to the first direction or parallel to a second direction that is perpendicular to the first direction.

The first protrusions and the second protrusions are arranged for retaining the pipe. The first and/or second protrusions may be considered to comprise lugs.

With the present invention the first protrusions are uniquely arranged to secure a pipe to the pipe retention device. They have the benefit of preventing uplift of a pipe as it is bent around the projections to change direction, such as at a point of inflexion. They have a secondary benefit of securing pipes of a reduced diameter, allowing the pipe retention device to secure pipes of varying diameter and in different circuits than has previously been possible.

The first protrusions preferably project at substantially 45 degrees to the first direction. The first protrusions may project at 90 degrees to one another. Each of the projections preferably comprises 4 of the first protrusions.

Each of the projections may preferably comprise 4 of the second protrusions.

The second protrusions of each projection may preferably project further from a central axis of the projection in the first and second directions than the first protrusions.

By this arrangement, the first and second protrusions act at least partly independently of one another. The first protrusions being used to secure the pipe as it is bent around a projection and the second protrusions being used to secure the pipe as it travels between adjacent projections in a straight line.

Preferably, the second end of each of the projections is open. Most preferably, the projections are hollow. Preferably, the first end of each of the projections is closed. The projections preferably each comprise a projection base having a planar outer face that is substantially co-planar with a surface of the base that is opposed to a surface of the base from which the projections project (i.e. co-planar with a bottom surface of the base when used on a floor).

With an open second end and/or a hollow structure, material, such as screed, may flow into the protrusion. A hollow structure also allows for a rigid stable protrusions that may be loaded directly. With a closed first end, there is provided a surface for fixing a projection to a mounting surface, i.e. fixing the pipe retention device at the point that is most prone to uplift from the mounting surface. An adhesive may be applied to the underside of the projection or the projection may be fixed using a fastener. The best arrangement is achieved when there is a planar projection base that is co-planar with the bottom surface of the base.

Each of the projections preferably comprises an outer wall. The outer wall may be at least partially curved. Most preferably, the outer wall is substantially cylindrical. The outer wall is preferably rigid and load bearing. The outer walls of the projections are preferably able to directly support a floor. The protrusions preferably project out beyond the outer walls of the projections.

The pipe retention device is most preferably injection moulded. Such a means of formation allows for a rigid load bearing structure to be provided.

Non-limiting embodiments of the present invention will now be described, by way of example only, with reference to the accompanying drawings, in which:
Figure 1 is a plan view of a pipe retention device according to one embodiment of the present invention;
Figure 2 is a partial enlarged plan view of the pipe retention device of Figure 1, which shows three projections;
Figure 3 is a partial perspective view of the pipe retention device of Figure 1, which shows a single projection;
Figure 4 is a partial perspective view of the pipe retention device of Figure 1, which shows an underside of the pipe retention device;
Figure 5 is a partial perspective view of the pipe retention device of Figure 1, which shows three projections and a male interlocking member;
Figure 6 is a partial perspective view of the pipe retention device of Figure 1, which shows an underside of the pipe retention device and a female interlocking member;
Figure 7 is a partial plan view of the pipe retention device of Figure 1 showing the underside of a corner of the pipe retention device with a pair of female engagement members;
Figure 8 is a partial plan view of the pipe retention device of Figure 1 showing the engagement of a first pipe that is bent through 180 degrees;
Figure 9 is a partial perspective view showing the bend of the pipe of Figure 8 and its engagement by the first protrusions of the projections; and
Figure 10 is a partial plan view of the pipe retention device of Figure 1 showing the engagement of a second pipe that is bent through 180 degrees and has a smaller diameter than the first pipe shown in Figures 8 and 9.

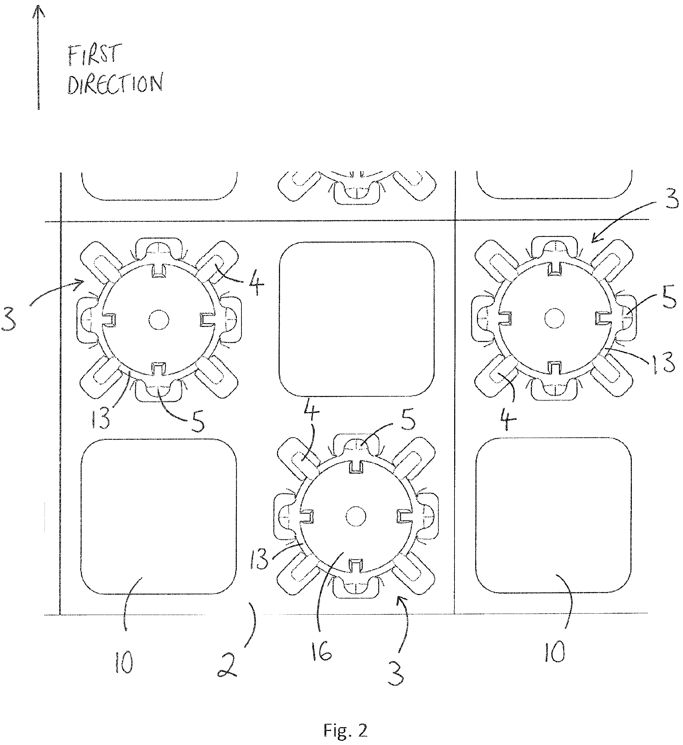

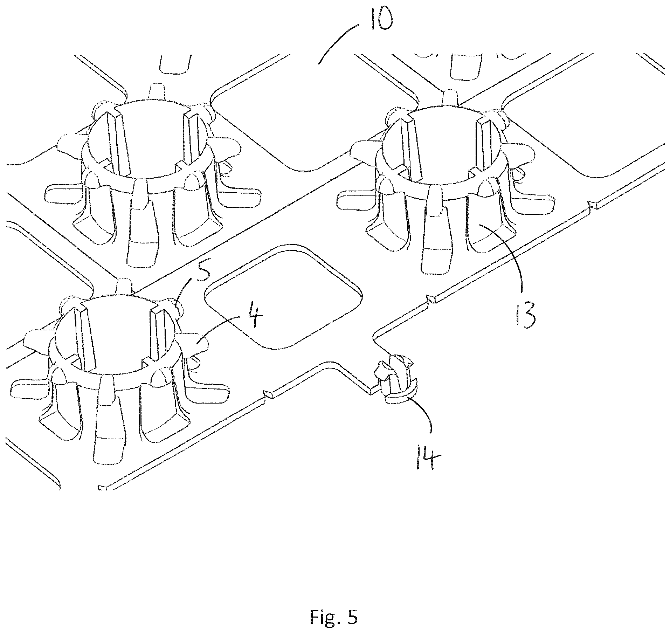

With reference to the figures, there is shown a pipe retention device 1 according to a first arrangement. The pipe retention device 1 comprises, broadly, a base 2 and an array of projections 3. The projections 3 project from the base 2. Each of the projections has a first end joined to the base and a second end distal the base, as clearly seen, for example, in Figures 2 and 5. Each of the projections 3 projects from the base 2 along an axis. In the present arrangement, as is preferred, the axis is perpendicular to a plane of the base. Each of the projections 3 comprises a plurality of protrusions 4, 5 that project radially outward from the projection 3. The protrusions 4, 5 are provided at or adjacent to the second end of the projection 3, distal the base 2. The projections preferably project in a direction that is substantially parallel to the base.

The present invention may be variously defined by several unique aspects applied to the pipe retention device 1. All of these aspects are combined in the depicted arrangement. It should be appreciated, however, that this need not be the case. In alternative arrangements a single of the aspects below may be provided or any select combination of two or more or all of the aspects may be provided.

In all aspects the protrusions 4, 5 are provided for retaining the pipe.

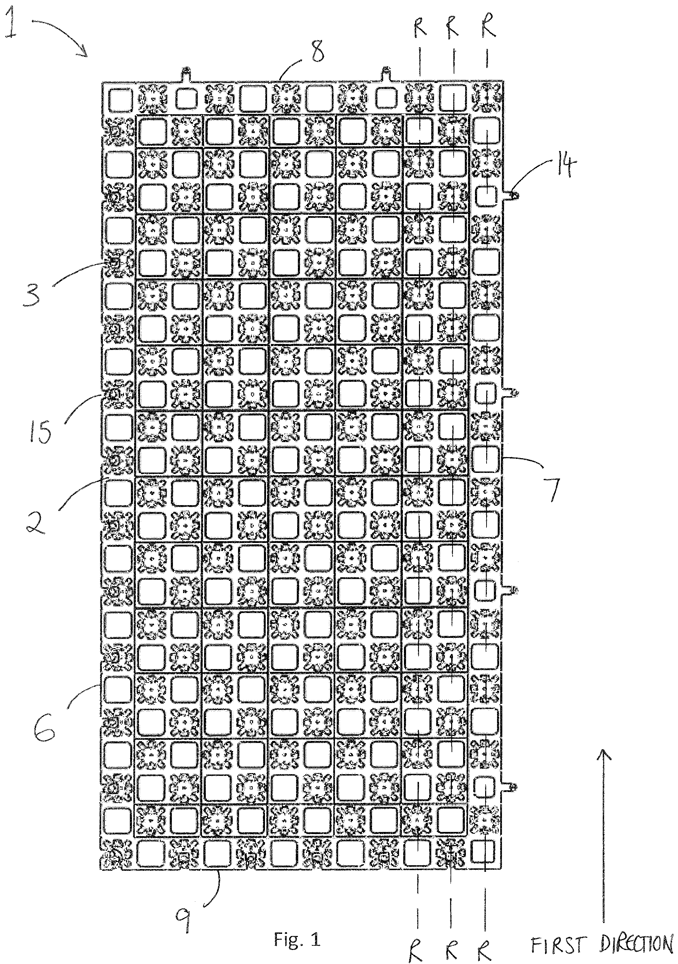

In a first aspect, the array of projections 3 of the pipe retention device comprises a plurality of spaced parallel rows R of the projections 3 (three of the rows R are marked with dashed lines in Figure 1). The rows R extend in a first direction, as marked with the arrow in Figure 1. The projections 3 in adjacent rows R are offset from one another in the first direction. The protrusions comprise first protrusions 4 and each of the first protrusions 4 projects at an oblique angle to the first direction.

Note that the parallel rows R are spaced from one another in a second direction (not marked), which is perpendicular to the first direction.

In a second aspect, the base has one or more substantially straight edges 6, 7, 8, 9 with at least one of the edges 6, 7 extending in a first direction. The protrusions comprise first protrusions 4 and each of the first protrusions 4 projects at an oblique angle to the first direction.

In the depicted arrangement, as clearly seen from Figure 1, the rows run parallel to the long edges 6, 7 of the base. Accordingly the first directions as defined by the first and second aspects are coincident. The first and second aspects are combined in the present arrangement. However, this need not be the case. For example, whilst according with the first aspect, the pipe retention device 1 may be configured with the base not comprising any straight sides

According to the invention, the protrusions 4, 5 of each of the projections 3 comprise first protrusions 4 and second protrusions 5 and the first protrusions 4 project radially outward from the projection by a greater distance than the second protrusions 5.

In a fourth aspect, the protrusions 4, 5 of each of the projections comprise first protrusions 4 and second protrusions 5 and the first protrusions 4 are arranged at an oblique angle to the second protrusions 5. Most preferably, the first protrusions 4 are arranged at 90 degrees to one another and the second protrusions 5 are arranged at 90 degrees to one another, as seen in the figures.

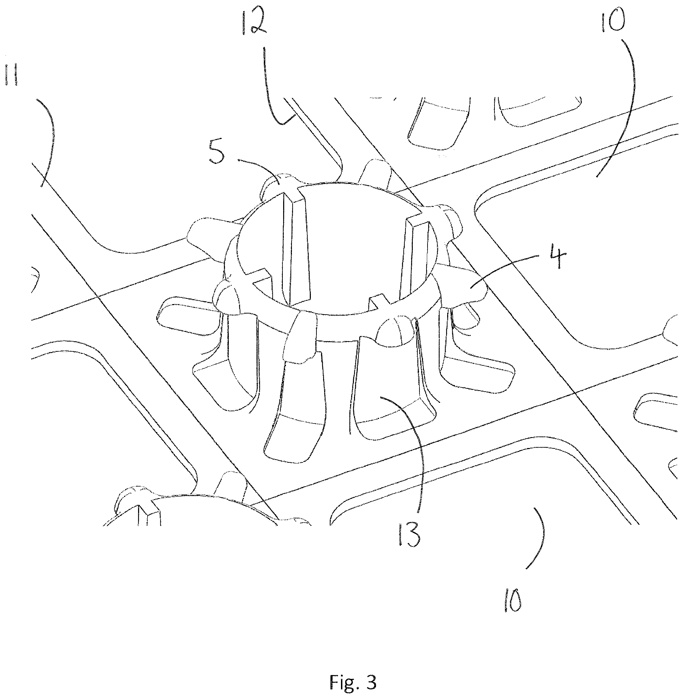

In the depicted arrangement, as clearly seen from Figures 2 and 3, the first protrusions 4 project radially outward by a greater distance than the second protrusions 5 and the first and second protrusions 4, 5 are arranged at an oblique angle to one another.

Noting that any of the aspects may be taken in isolation, the depicted arrangement will be discussed in detail

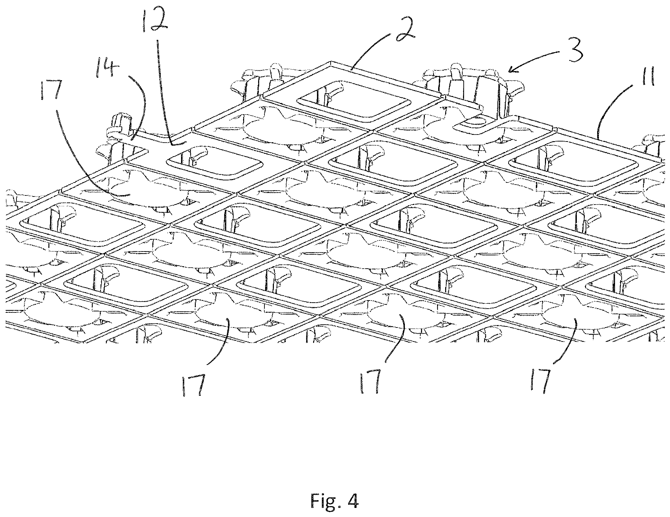

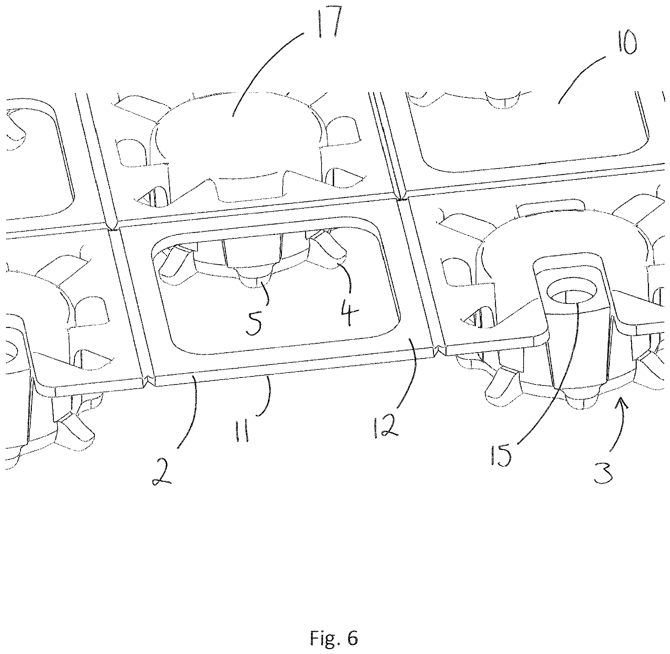

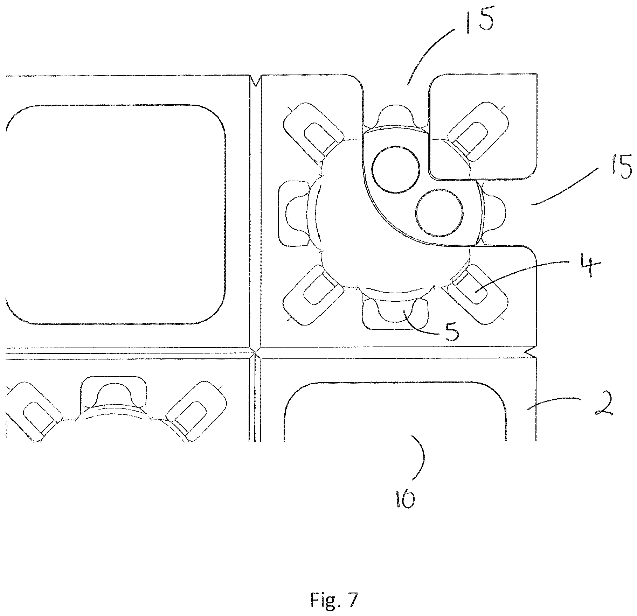

The base 2 has four straight sides 6, 7, 8, 9. It is substantially rectangular, as seen in Figure 1. A range of differently sized and shaped bases may, however, be provided. The base 2 is substantially planar with a planar attachment surface 12 (as best seen in Figures 4, 6 and 7) that is opposed to a side 11 of the base from which the projections project. The attachment surface 10 will be a lower surface when the pipe retention device is used in a floor based heating/cooling system. The base 2 is provided with a number of voids/openings 10 for the purpose of saving material/weight and/or to allow a screed to come into direct contact with the attachment surface in order for the screed to bond to that surface. These could be omitted in alternative arrangements. Moreover, the base need not be substantially planar, it could for example comprises a framework of rods or other members interlinking the protrusions, or otherwise. The provision of a planar attachment surface 12 is preferable, however, to allow for the device to be adhered to a mounting surface. The base 2 is provided with a plurality of male and female interlocking members 14, 15. The male interlocking members 14 are provided on two edges 7, 8 and the female interlocking members 15 are provided on the other two edges 6, 9, as seen in Figure 1, for interlocking the device with corresponding other devices to cover a larger surface area than an individual pipe retention device 1. Figure 7 shows a corner of the base 2 that is provided with a pair of the female interlocking members 15. Numerous alternative interlocking configurations will, however, be readily conceived by those skilled in the art. The interlocking members 14, 15 could also be omitted.

The second end of each of the projections 3 that is distal the base 2 is open and the first end of each of the projections that is proximal to/fixed to the base 2 is closed. The projections are thereby hollow. In alternative, less preferable, arrangements they could be solid. It is preferable that each of the projections comprises an outer wall 13 that is at least partially curved. In the present arrangement, the outer wall 13 of each of the projections is substantially cylindrical. The outer walls, regardless of shape may be solid, as shown, or could comprise openings. The hollow projections each comprise a projection base 16 having a planar outer face 17 that is substantially co-planar with the planar attachment surface of the base 12. A particular advantage is the ability to use a fixing such as a screw, or adhesive, to fix the projection bases 16 directly to an attachment surface, such as a floor.

The pipe retention device is preferably injection moulded to provide suitable structural rigidity and form. Other moulding techniques may be implemented instead.

Each of the projections 3 comprises four of the first protrusions 4 and four of the second protrusions 5. The first protrusions 4 are arranged at 90 degrees to one another and project at substantially 45 degrees to the first direction. The second protrusions 5 are arranged at 90 degrees to one another and project in either the first or second direction. It must be appreciated that in alternative arrangements there may be less of the first and/or second protrusions and they may be provided at different angles to one another and/or the first direction.

As best seen in Figure 2, the first protrusions 4 project radially outward by a greater distance than the second protrusions 5. However as it can be seen in Figure 2, the second protrusions 5 of each projection 3 may project further from the projection 3 in the first and second directions than the first protrusions.

The shape of the first and second protrusions is not particularly limited. They may, for example, comprise arms, fingers or tabs. They are preferably resilient. The first protrusions 4 at least may be hook like in form. At least the first protrusions 4 may have profiles that curve or taper towards their tips as they projects away from the projections 3. In particular, they may have surfaces that oppose the surface 11 of the base from which the projections 3 project and which at least in part follow the outer profile/circumference of the pipes to be retained, by curving or tapering. In the present arrangement, by way of example, as best seen in Figures 3 to 5 and 9, the first protrusions 4 have curved surfaces that follow a curvature of the pipes to be retained. As above, however, the invention is not to be specifically limited in this regard.

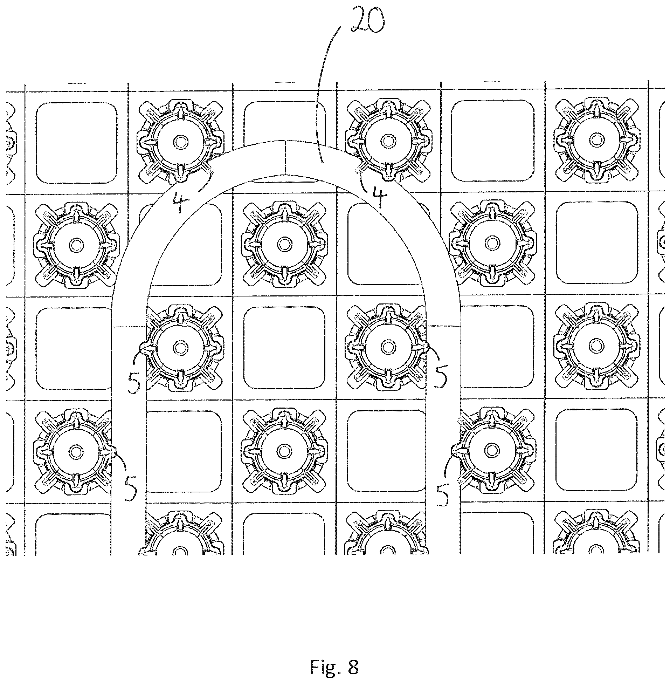

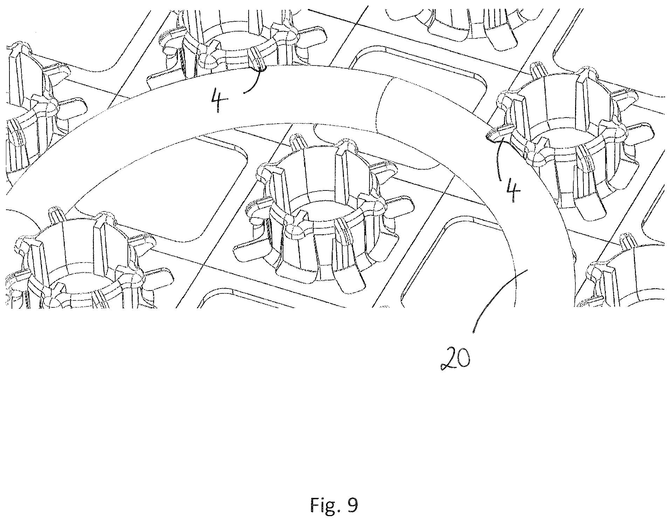

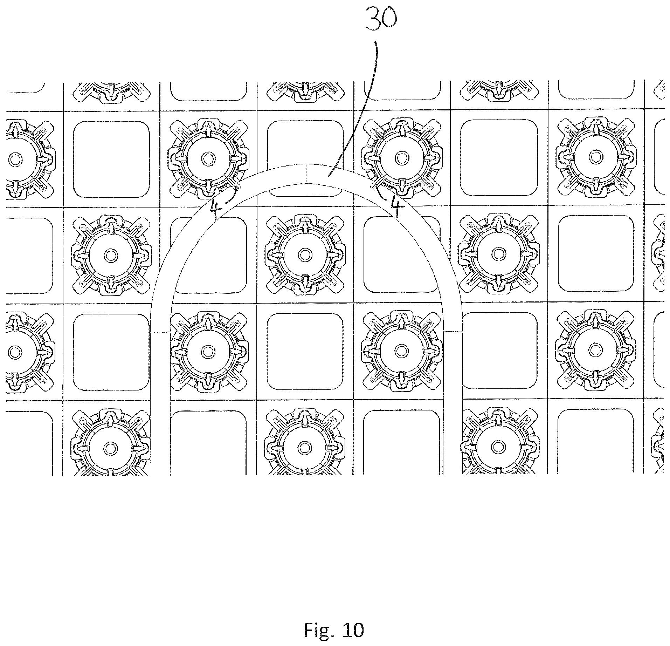

Figures 8 to 10 shows the engagement of pipes using the pipe retention device 1. In Figures 8 and 9 a first pipe 20 having a first diameter is retained. The first pipe has an outer diameter that is substantially equal to the distance between the outer walls of the projections of adjacent rows R in the second direction. In Figure 10 a second pipe 30, having a smaller diameter than the first pipe, is retained. Figures 8 to 10 illustrate how the first projections engage the pipes and prevent uplift of the pipes where the pipe is bent. It should be noted that with smaller diameter pipes, it may be only the first protrusions 4 that engage the pipes. Notably, in this regard, the first protrusions 4 allow a far wider range of pipes having different diameters to be retained. In a preferred, non-limiting arrangement, the pipe retention device 1 may be configured such that it can retain pipes in a diameter range of 6 to 17mm. This contrasts, for example, to the prior art devices, such as that shown in EP 2994582, which is only suitable for retaining pipes in the diameter range of 16 to 18mm.

In Figures 8 to 10, the pipe is bent through 180 degrees, as is common. It need not be bent as such and, as will be appreciated, the first projections will engage the pipes when they take different bent paths.

Whilst the first protrusions project radially from the outer walls by a greater distance than the second protrusions, the second protrusions project by a greater distance in the second direction than the first projections, as is clearly seen in the figures. By such arrangement, the second protrusions may engage straight portions of the pipes, as seen in Figure 8, whilst the first protrusions do not inhibit the insertion of the straight portions of the pipes between the projections of adjacent rows R in the second direction.

## Claims

1. A pipe retention device (1) of moulded plastic, which comprises:
a base (2); and
an array of projections (3), which project from the base (2), each of the projections (3) having a first end joined to the base and a second end distal the base,
wherein the array of projections (3) comprises a plurality of spaced parallel rows (R) of the projections (3), the rows (R) extending in a first direction and the projections (3) in adjacent rows (R) being offset from one another in the first direction, and
wherein each of the projections (3) projects from the base (2) along an axis and comprises a plurality of protrusions (4, 5) that project radially outward from the projection (3) for retaining a pipe, the protrusions (4, 5) being provided at or adjacent to the second end, wherein the protrusions (4, 5) comprise first protrusions (4) and each of the first protrusions (4) projects at an oblique angle to the first direction,
**characterised in that** the protrusions (4, 5) further comprise a plurality of second protrusions (5), wherein each of the first protrusions (4) projects radially outward by a greater distance than the second protrusions (5).

2. A pipe retention device (1) as claimed in Claim 1, wherein the base (2) has one or more substantially straight edges (6, 7, 8, 9), at least one of the edges (6, 7) extending in the first direction.

3. A pipe retention device (1) as claimed in any preceding claim , wherein each of the second protrusions (5) projects either parallel to the first direction or parallel to a second direction that is perpendicular to the first direction .

4. A pipe retention device (1) as claimed in any preceding claim, wherein the second protrusions (5) of each projection (3) project further from a central axis of the projection (3) in the first and second directions than the first protrusions (4).

5. A pipe retention device (1) as claimed in any preceding claim, wherein each of the projections (3) comprises 4 of the second protrusions (5).

6. A pipe retention device (1) as claimed in any preceding claim, wherein the first protrusions (4) project at substantially 45 degrees to the first direction.

7. A pipe retention device (1) as claimed in any preceding claim, wherein the first protrusions (4) project at 90 degrees to one another.

8. A pipe retention device (1) as claimed in any preceding claim, wherein each of the projections (3) comprises 4 of the first protrusions (4).

9. A pipe retention device (1) as claimed in any preceding claim, wherein the second end of each of the projections (3) is open.

10. A pipe retention device (1) as claimed in any preceding claim, wherein the first end of each of the projections (3) is closed.

11. A pipe retention device (1) as claimed in any preceding claim, wherein each of the projections (3) comprises an outer wall (13) that is at least partially curved.

12. A pipe retention device (1) as claimed in Claim 11, wherein the outer wall (13) is substantially cylindrical.

13. A pipe retention device (1) as claimed in any preceding claim wherein the protrusions (4, 5) comprise lugs.

14. A pipe retention device (1) as claimed in any preceding claim, wherein the projections (3) each comprise a projection base (16) having a planar outer face (17) that is substantially co-planar with a surface (12) of the base (2) that is opposed to a surface (11) of the base (2) from which the projections (3) project.

## Patentansprüche

1. Rohrrückhaltevorrichtung (1) aus geformtem Kunststoff, welche umfasst:
Eine Basis (2); und
eine Anordnung von Vorsprüngen (3), die aus der Basis (2) hervorragen, wobei jeder der Vorsprünge (3) ein erstes mit der Basis verbundenes Ende und ein zweites Ende fern der Basis aufweist,
wobei die Anordnung von Vorsprüngen (3) eine Vielzahl beabstandeter paralleler Reihen (R) der Vorsprünge (3) umfasst, wobei sich die Reihen (R) in eine erste Richtung erstrecken und die Vorsprünge (3) in benachbarten Reihen (R) in der ersten Richtung voneinander versetzt sind, und
wobei jeder der Vorsprünge (3) aus der Basis (2) entlang einer Achse hervorragt und eine Vielzahl von Überständen (4, 5) umfasst, die aus dem Vorsprung (3) radial nach außen hervorragen, um das Rohr zurückzuhalten, wobei die Überstände (4, 5) am oder angrenzend an das zweite Ende bereitgestellt sind, wobei die Überstände (4, 5) erste Überstände (4) umfassen und jeder der ersten Überstände (4) in einem schiefen Winkel zur ersten Richtung hervorragt,
**dadurch gekennzeichnet, dass** die Überstände (4, 5) ferne reine Vielzahl von zweiten Überständen (5) umfassen, wobei jeder der ersten Überstände (4) um eine größere Distanz als die zweiten Überstände (5) radial nach außen hervorragt.

2. Rohrrückhaltevorrichtung (1) wie in Anspruch 1 beansprucht, wobei die Basis (2) eine oder mehrere wesentlich gerade Ränder (6, 7, 8, 9) aufweist, sich wenigstens einer der Ränder (6, 7) in die erste Richtung erstreckt.

3. Rohrrückhaltevorrichtung (1) wie in irgendeinem vorhergehenden Anspruch beansprucht, wobei jeder der zweiten Überstände (5) entweder parallel zur ersten Richtung oder parallel zu einer zweiten Richtung hervorragt, die senkrecht zur ersten Richtung ist.

4. Rohrrückhaltevorrichtung (1) wie in irgendeinem vorhergehenden Anspruch beansprucht, wobei die zweiten Überstände (5) jedes Vorsprungs (3) weiter aus einer mittigen Achse des Vorsprungs (3) in den ersten und zweiten Richtungen als die ersten Überstände (4) hervorragen.

5. Rohrrückhaltevorrichtung (1) wie in irgendeinem vorhergehenden Anspruch beansprucht, wobei jeder der Vorsprünge (3) 4 der zweiten Überstände (5) umfasst.

6. Rohrrückhaltevorrichtung (1) wie in irgendeinem vorhergehenden Anspruch beansprucht, wobei die ersten Überstände (4) mit wesentlich 45 Grad zur ersten Richtung hervorragen.

7. Rohrrückhaltevorrichtung (1) wie in irgendeinem vorhergehenden Anspruch beansprucht, wobei die ersten Überstände (4) mit 90 Grad zueinander hervorragen.

8. Rohrrückhaltevorrichtung (1) wie in irgendeinem vorhergehenden Anspruch beansprucht, wobei jeder der Vorsprünge (3) 4 der ersten Überstände (4) umfasst.

9. Rohrrückhaltevorrichtung (1) wie in irgendeinem vorhergehenden Anspruch beansprucht, wobei das zweite Ende jedes der Vorsprünge (3) offen ist.

10. Rohrrückhaltevorrichtung (1) wie in irgendeinem vorhergehenden Anspruch beansprucht, wobei das erste Ende jedes der Vorsprünge (3) geschlossen ist.

11. Rohrrückhaltevorrichtung (1) wie in irgendeinem vorhergehenden Anspruch beansprucht, wobei jeder der Vorsprünge (3) eine Außenwand (13) umfasst, die wenigstens teilweise gebogen ist.

12. Rohrrückhaltevorrichtung (1) nach Anspruch 11, wobei die Außenwand (13) wesentlich zylindrisch ist.

13. Rohrrückhaltevorrichtung (1) wie in irgendeinem vorhergehenden Anspruch beansprucht, wobei die Überstände (4, 5) Ösen umfassen.

14. Rohrrückhaltevorrichtung (1) wie in irgendeinem vorhergehenden Anspruch beansprucht, wobei die Vorsprünge (3) jeweils eine Vorsprungbasis (16) mit einer planaren Außenfläche (17) umfassen, die wesentlich komplanar mit einer Oberfläche (12) der Basis (2) ist, welche einer Oberfläche (11) der Basis (2) gegenüberliegt, aus der die Vorsprünge (3) hervorragen.

## Revendications

1. Dispositif de retenue de tuyaux (1) en plastique moulé, comprenant
une embase (2) ; et
un réseau de saillies (3) émergeant de l'embase (2), chacune des saillies (3) possédant un premier bout joint à l'embase et un deuxième bout distal de l'embase,
le réseau de saillies (3) comprenant une pluralité de rangées parallèles espacées (R) des saillies (3), les rangées (R) s'étendant dans une première direction, et les saillies (3) de rangées adjacentes (R) étant décalées l'une de l'autre dans la première direction, et
chacune des saillies (3) émergeant de l'embase (2) le long d'un axe, et comprenant une pluralité de saillies (4, 5) émergeant radialement vers l'extérieur depuis la saillie (3) pour retenir un tuyau, les saillies (4, 5) étant agencées au deuxième bout, ou adjacentes à celui-ci, les saillies (4, 5) comprenant des premières saillies (4), et chacune des premières saillies (4) faisant saillie à un angle oblique avec la première direction,
**caractérisé en ce que** les saillies (4, 5) comprennent en outre une pluralité de deuxièmes saillies (5), chacune des premières saillies (4) émergeant radialement vers l'extérieur sur une distance supérieure aux deuxièmes saillies (5).

2. Dispositif de retenue de tuyaux (1) selon la revendication 1, l'embase (2) étant dotée d'un ou plusieurs bords substantiellement droits (6, 7, 8, 9), au moins un des bords (6,7) s'étendant dans la première direction.

3. Dispositif de retenue de tuyaux (1) selon une quelconque des revendications précédentes, chacune des deuxièmes saillies (5) émergeant soit parallèlement à la première direction, soit parallèlement à une deuxième direction perpendiculaire à la première direction.

4. Dispositif de retenue de tuyaux (1) selon une quelconque des revendications précédentes, les deuxièmes saillies (5) de chaque saillie (3) émergeant davantage, depuis un axe central de la saillie (3) dans les première et deuxième directions, que les premières saillies (4).

5. Dispositif de retenue de tuyaux (1) selon une quelconque des revendications précédentes, chacune des saillies (3) comprenant 4 des deuxièmes saillies (5).

6. Dispositif de retenue de tuyaux (1) selon une quelconque des revendications précédentes, les premières saillies (4) émergeant à un angle de substantiellement 45 degrés avec la première direction.

7. Dispositif de retenue de tuyaux (1) selon une quelconque des revendications précédentes, les premières saillies (4) faisant saillie à 90 degrés l'une de l'autre.

8. Dispositif de retenue de tuyaux (1) selon une quelconque des revendications précédentes, chacune des saillies (3) comprenant 4 des premières saillies (4).

9. Dispositif de retenue de tuyaux (1) selon une quelconque des revendications précédentes, le deuxième bout de chacune des saillies (3) étant ouvert.

10. Dispositif de retenue de tuyaux (1) selon une quelconque des revendications précédentes, le premier bout de chacune des saillies (3) étant fermé.

11. Dispositif de retenue de tuyaux (1) selon une quelconque des revendications précédentes, chacune des saillies (3) comprenant une paroi extérieure (13) partiellement incurvée.

12. Dispositif de retenue de tuyaux (1) selon la revendication 11, la paroi extérieure (13) étant substantiellement cylindrique.

13. Dispositif de retenue de tuyaux (1) selon une quelconque des revendications précédentes, les saillies (4, 5) comprenant des pattes.

14. Dispositif de retenue de tuyaux (1) selon une quelconque des revendications précédentes, les saillies (3) comprenant chacune une embase de saillie (16) ayant une face extérieure plane (17) substantiellement coplanaire avec une surface (12) de l'embase (2) opposée à une surface (11) de l'embase (2) de laquelle les saillies (3) émergent.
